# FASCICULE DE BREVET EUROPEEN

(11) **EP 3 645 444 B1**
(45) Date de publication et mention de la délivrance du brevet: **12.04.2023**
(21) Numéro de dépôt: 18750244.8
(22) Date de dépôt: 28.06.2018
(51) Int. Cl.: B66F 9/075, B66F 9/20, B66F 9/24, G05D 1/00, B60W 50/035

(54) **SYSTÈME DE COMMANDE D'UN CHARIOT ÉLÉVATEUR À FOURCHE À PLUSIEURS MODES DE FONCTIONNEMENT**
SYSTEM ZUR STEUERUNG EINES GABELSTAPLERS MIT MEHREREN BETRIEBSMODI
SYSTEM FOR CONTROLLING A FORK LIFT TRUCK WITH MULTIPLE OPERATING MODES

(30) Priorité: 29.06.2017 FR 1755996
(43) Date de publication de la demande: 06.05.2020
(73) Titulaire: Compagnie Générale des Etablissements Michelin, 63000 Clermont-Ferrand (FR)
(72) Inventeur: NUNES ESPIRITO SANTO, Ruben André, 63040 Clermont-Ferrand Cedex 9 (FR)
(74) Mandataire: Noel, Luminita
(86) Numéro de dépôt international: PCT/FR2018/051601
(87) Numéro de publication internationale: WO 2019/002784

(56) Documents cités:
- EP-A1- 2 495 145
- EP-A1- 3 061 719
- WO-A1-2013/033179
- WO-A1-2013/150244
- FR-A1- 2 667 367
- JP-A- 2000 185 534
- US-A- 4 077 486
- US-A- 5 469 356

## Description

### DOMAINE DE L'INVENTION

L'invention concerne un système de commande pour chariot élévateur à fourche disposant de plusieurs modes de fonctionnement. De manière plus précise, l'invention concerne un système de commande pour un chariot élévateur à fourche normalement prévu pour fonctionner en mode manuel.

Un chariot élévateur manuel est conçu pour être conduit par un cariste disposant d'un permis adapté. En effet, la conduite et le maniement d'un tel véhicule, et de ses différents accessoires, nécessite une formation spécifique. Le conducteur apprend ainsi à manier le véhicule, à utiliser les fourches pour le transport de matériel, et à respecter toutes les règles de sécurité afférentes à l'environnement dans lequel il évolue.

Pour éviter ces contraintes, des chariots élévateurs entièrement autonomes sont apparus sur le marché. Ces chariots, destinés au transport de marchandise en toute autonomie, sont relativement coûteux, et n'offrent qu'une possibilité d'utilisation en mode autonome, ce qui peut s'avérer limitant pour certaines utilisations.

On connaît également, de la demande WO2013/150244, des véhicules habituellement prévus pour fonctionner en mode manuel, et qui sont adaptés pour permettre un deuxième mode de fonctionnement en mode automatique. Ainsi, il devient possible de réaliser de nombreux services tels que un service de voiturier, un service de parking ... Toutefois, ce document ne concerne que des véhicules de tourisme, et ne prend pas en compte les particularités d'un chariot élévateur à fourche, et d'un environnement d'évolution tel qu'une usine.

De manière similaire, le document US 5 469 356 décrit un système de commande d'un véhicule de génie civil permettant un mode de fonctionnement manuel et un mode de fonctionnement en automatique de celui-ci.

Le document WO 2013/033179 décrit un système de commande d'un chariot élévateur comportant un système de navigation et une interface de commande permettant au chariot de fonctionner en mode manuel ou en mode automatique.

La présente invention vise donc à proposer un système de commande pour chariot élévateur qui permette de remédier aux inconvénients précités. En préambule, on précise ici que les termes « chariot », « chariot élévateur » et « chariot élévateur à fourche » seront indifféremment utilisés dans ce texte, avec la même signification.

### BREVE DESCRIPTION DE L'INVENTION

Ainsi, l'invention concerne un système de commande d'un chariot élévateur, comportant :
- Des organes de commande humaine générant des signaux de pilotage manuel d'actionneurs du véhicule,
- Un module de détection de l'environnement du véhicule,
- Un module de navigation permettant de générer des signaux de consigne de pilotage en fonction d'une instruction reçue,
- Un module de commande générant des signaux de pilotage, ce module de commande comprenant :
   o Un sous-module de commande automatique générant des signaux de pilotage autonome à destination d'un ou plusieurs actionneurs du véhicule, en fonction des signaux de consigne et des informations issues du module de détection,
   ∘ Un sous-module de commande assistée générant des signaux de pilotage manuels corrigés en fonction des signaux de pilotage manuels et des informations issues du module de détection et/ou des signaux de consigne de pilotage,
- Un module de commutation agencé pour sélectionner un ou des signaux de pilotage manuel et/ou un ou des signaux de pilotage autonome, et/ou un ou des signaux de pilotage manuels corrigés.

Ainsi, l'invention permet la mise en oeuvre, pour la commande d'un chariot élévateur, de différents modes de fonctionnement, du tout-autonome au tout-manuel, en passant par des modes assistés. Ces modes de fonctionnement seront décrits ultérieurement en lien avec la description détaillée du module de commutation.

L'invention concerne également un chariot élévateur muni d'un système de commande selon l'invention. L'ensemble des caractéristiques qui seront ci-après décrites pourront donc concerner le système de commande seul, ou le chariot muni du système de commande.

Les organes de commande humaine sont avantageusement ceux présents sur un chariot élévateur du marché. Une mise en oeuvre de l'invention consiste alors à ajouter, sur un tel chariot existant, les autres éléments du système de commande, ainsi que les interfaces nécessaires, afin de transformer un chariot élévateur manuel en chariot autonome ou semiautonome.

Dans un mode de réalisation préférentiel, le module de commutation sélectionne les signaux de pilotage en fonction de quatre modes de fonctionnement :
- Un mode manuel dans lequel seuls les signaux manuels sont sélectionnés,
- Un mode tout-automatique dans lequel seuls les signaux autonomes sont sélectionnés,
- Un mode manuel à sécurisation assistée, dans lequel sont sélectionnés les signaux de pilotage manuels corrigés par les informations issues du module de détection,
- Un mode manuel à navigation assistée, dans lequel sont sélectionnés les signaux de pilotage manuel corrigés par les signaux de consigne de pilotage.

Avantageusement, ce module de commutation est actionné via un sélecteur installé sur le chariot élévateur. Ainsi, un système de commande selon l'invention permet, même dans le cas où un opérateur souhaiterait conduire lui-même le chariot, de profiter des équipements installés pour l'automatisation du chariot pour offrir une assistance à la conduite, et ainsi faciliter le travail de l'opérateur et renforcer la sécurité des déplacements du chariot.

Dans un mode de réalisation préférentiel, le module de commutation permet également de choisir un mode maintenance, dans lequel l'ensemble des éléments du système de commande, à l'exception des organes à commande humaine, sont désactivés, notamment par une déconnexion physique. Ceci permet, par exemple, à un fabricant initial du chariot élévateur manuel de pouvoir intervenir pour des actions de maintenance, sans être gêné par les éléments additionnels du système de commande.

Dans un autre mode de réalisation préférentiel, le module de navigation comprend un ou plusieurs des éléments suivants :
- Des moyens de géolocalisation, permettant de connaître en temps réel la position du chariot élévateur,
- Des moyens de télécommunications en émission, permettant par exemple de transmettre les informations de géolocalisation à un système de gestion générale, afin qu'un superviseur connaisse à chaque instant la position de différents chariots dans une usine,
- Des moyens de télécommunications en réception, permettant de recevoir des consignes concernant un trajet à parcourir, ou des actions à effectuer comme par exemple une action d'aller chercher du matériel à un point A pour le décharger ensuite à un point B. Partant de ces éléments reçus, le module de navigation peut alors générer des signaux de consigne de pilotage. Ces signaux de consigne comprennent avantageusement une ou plusieurs consignes parmi : une consigne de vitesse, une consigne d'angle de rotation des roues du chariot, une consigne d'élévation des fourches, une consigne d'angle d'inclinaison des fourches, une consigne d'écartement des fourches.

Ainsi que précédemment indiqué, les signaux de pilotage qui seront effectivement transmis aux actionneurs sont déterminés en fonction de ces signaux de consigne, déterminé par le module de navigation, mais également en tenant compte de paramètres additionnels issus sur module de détection.

Ainsi, dans un premier exemple de réalisation, le module de détection de l'environnement comprend un sous-module de gestion des fourches, comprend :
- Des capteurs de détection de la présence de chargement sur les fourches,
- Des capteurs de position des fourches.

Selon l'état des fourches (levée ou baissée, pleine ou vide), les signaux de pilotage varieront. En effet, par exemple, un chariot élévateur dont les fourches sont chargées ne peut pas circuler à la même vitesse qu'un chariot à vide. De la même façon, un chariot élévateur dont les fourches sont en position haute ne peut pas circuler à la même vitesse ou prendre les mêmes angles, qu'un chariot dont les fourches sont en position basse. Ces éléments issus du module de détection permettent alors de corriger les signaux de consigne pour les rendre compatibles aux exigences de sécurité pour l'environnement du chariot.

Dans un autre mode de réalisation, le sous-module de gestion des fourches comprend des moyens pour détecter une incohérence au niveau du chargement des fourches, et pour émettre un signal d'arrêt en cas d'incohérence. En effet, si le sous-module de gestion des fourches détecte une chute des objets chargés sur les fourches, ou un mauvais centrage de ces objets, il est nécessaire d'arrêter aussitôt le déplacement du chariot, afin d'éviter des accidents. Dans ce cas, le signal d'arrêt est alors transmis aux modules de commande pour qu'il génère des signaux de pilotage correspondant, à savoir des signaux de pilotage d'arrêt d'urgence.

Dans un autre exemple de réalisation, le module de détection de l'environnement comprend un sous-module de détection des zones de protection, comprenant au moins un laser permettant de détecter la présence d'un obstacle dans une zone environnant le véhicule.

En effet, un chariot élévateur évolue dans un environnement contraint tel qu'une usine ou un entrepôt de stockage, et il doit donc prendre en compte les différents obstacles, matériels ou humains, afin d'éviter tout collision qui pourrait endommager le matériel et mettre en danger les opérateurs travaillant dans l'environnement du chariot. Ces éléments permettent alors, comme précédemment, de corriger les signaux de consigne pour tenir compte de l'environnement.

De la même façon, les organes de commande humaine sont ceux généralement installés sur des chariots élévateurs du commerce, et compris dans le groupe comprenant : une pédale d'accélérateur, une pédale de frein, un volant, un sélecteur de sens de marche du véhicule, une manette de commande de l'élévation, de l'inclinaison et de l'écartement des fourches.

Grâce à l'ensemble des éléments de ce système de commande, un chariot élévateur selon l'invention peut se déplacer sur sol dégradé ou irrégulier sans problème pour le transport de palettes et de bobines, à des vitesses atteignant 4m/s. En effet, la présence des systèmes de sécurité, par le biais du module de détection de l'environnement, permet d'augmenter la vitesse sans risque pour l'entourage du chariot, puisqu'on sait qu'en cas de problème les systèmes de sécurité se mettront en fonctionnement. Un tel chariot permet donc de gagner en productivité tout en garantissant la sécurité dans l'usine ou l'entrepôt, et ce pour un coût raisonnable, puisqu'on ajouter des éléments à un chariot existant sans apporter de modifications substantielles à l'architecture de base du chariot.

De manière générale, l'ensemble des fonctionnalités qui viennent d'être décrites sous forme de modules peuvent être découpées physiquement d'une façon différente et gérées par des électroniques mutualisées ou distinctes.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre un schéma bloc d'un système de commande selon l'invention,
- La figure 2 permet de détailler le fonctionnement du module de commutation d'un système selon l'invention.

### DESCRIPTION DU MEILLEUR MODE DE REALISATION DE L'INVENTION

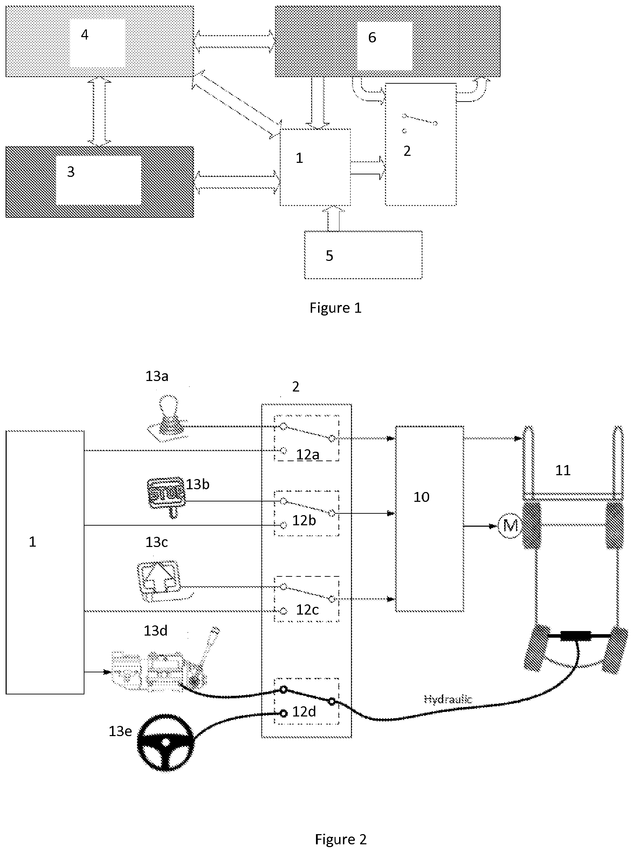

La figure 1 montre un module de commande 1 qui comprend un ensemble de circuits électroniques permettant de générer des signaux de pilotage autonome ou des signaux de pilotage manuels corrigés pour un chariot élévateur 6.

Les signaux de pilotage ainsi générés sont transmis au module de commutation 2 qui sélectionne les signaux à transmettre effectivement aux actionneurs du véhicule. Ce module de commutation sera décrit en détail à l'aide de la figure 2.

Le module de commande 1 reçoit en entrée des signaux de consigne issus du module de navigation 3. Ces signaux de consigne comprennent notamment un signal de vitesse et un signal d'angle de direction pour le chariot qui se transcrit en signal d'actionnement du volant. Les signaux de consigne comprennent également des signaux pour la gestion des fourches, notamment la hauteur, l'inclinaison et l'écartement des fourches.

Le module de navigation 3 comprend des moyens de géolocalisation, et comprend également une mémoire dans laquelle est stockée une cartographie du lieu dans lequel le chariot est destiné à évoluer, par exemple une usine ou un entrepôt. La cartographie peut être chargée directement dans la mémoire en provenance d'une source externe, mais elle peut également être établie directement par le module de navigation par apprentissage lors des premiers déplacements du chariot dans un lieu à cartographier.

Le module de navigation comprend en outre des moyens de réception de données issues d'un serveur distant, par exemple par Wi-Fi. Ces données reçues correspondent à des missions à effectuer par le chariot, et comprennent par exemple l'identification d'itinéraires à effectuer, ou de marchandises à charger et décharge. Pour ce faire, le module de navigation 3 reçoit également des informations du module de détection 4. Ce module de détection permet par exemple d'informer le module de navigation quant à la présence d'obstacles dans l'environnement du chariot, ou encore de la position des fourches.

Ce module de détection 4 communique également directement avec le module de commande 1, par exemple pour corriger des consignes de pilotage en fonction de paramètres extérieurs qui n'auraient pas été pris en compte par le module de navigation, et qui peuvent mettre en cause la sécurité du chariot ou des opérateurs.

Le module de commande 1 reçoit également des informations d'un ensemble de capteurs 5, par exemple des capteurs permettant de détecter une anomalie au niveau du chargement. A réception de ce type d'informations, une procédure d'arrêt d'urgence du chariot put alors être activée. Cette procédure d'urgence consiste, par exemple, à agir en série sur un bouton d'arrêt d'urgence initialement présent sur le chariot élévateur, et qui a pour conséquence la coupure de l'alimentation du chariot, et l'arrêt du chariot par un relâchement de la pression sur les freins multidisques. Ainsi, la procédure d'urgence agit exactement comme si un opérateur avait appuyé sur le bouton d'urgence.

Nous allons maintenant décrire en détail le module de commutation à l'aide de la figure 2. Ce module de commutation est connecté à l'interface électrique 10 du chariot 11. Cette interface est celle originellement présente sur le chariot 11, et elle est reliée à l'ensemble des actionneurs et des capteurs originellement présent sur le chariot.

Le module de commutation est relié à un sélecteur installé sur le chariot, et qui permet de choisir le mode de fonctionnement.

Le module de commutation comprend un ensemble de commutateurs 12a, 12b, 12c.... qui permettent de commuter entre les signaux issus directement des organes à commande humaine, et les signaux issus du module de commande 1.

On voit ainsi un commutateur pour les manettes 13a du chariot, qui permettent de choisir le sens de la marche du chariot, et également de piloter le fonctionnement des fourches en mode manuel.

On voit également un commutateur pour la pédale de frein 13b, un pour la pédale d'accélérateur 13c, et un pour le volant 13e.

On constate sur cette figure que le cas du volant est particulier, puisque les signaux électriques de pilotage de l'angle de direction doivent être transformés en signaux hydrauliques et transmis directement au chariot 11 par une connexion hydraulique. Pour ce faire, un système de commande selon l'invention comprend avantageusement une vanne hydraulique permettant la transformation des signaux.

Selon le mode de fonctionnement choisi, à l'aide d'un sélecteur installé dans le véhicule, un ou plusieurs de ces éléments sont activés ou désactives, de la façon suivante :

### Module de commutation en mode manuel :

- Module de commande : désactivé
- Module de navigation : désactivé
- Module de détection : désactivé
- Procédure d'arrêt d'urgence : activée
- Dans ce cas, le module de commutation sélectionnera les signaux issus directement des organes humains pour les transmettre à l'interface électrique 10. Les commutateurs seront donc dans la position montrée en figure 2.

### Module de commutation en mode manuel à sécurisation assistée :

- Module de commande : activé
- Module de navigation : désactivé
- Module de détection : activé
- Procédure d'arrêt d'urgence : activée
- Dans ce cas, le module de commutation sélectionnera les signaux manuels, corrigés en fonction des informations issues du module de détection. Les commutateurs seront donc dans la position montrée en figure 2.

### Module de commutation en mode manuel à navigation assistée :

- Module de commande : activé
- Module de navigation : activé
- Module de détection : désactivé
- Procédure d'arrêt d'urgence : activée
- Dans ce cas, le module de commutation sélectionnera les signaux manuels, corrigés en fonction des informations issues du module de navigation. Les commutateurs seront donc dans la position montrée en figure 2.

### Mode tout-autonome :

- Module de commande : activé
- Module de navigation : activé
- Module de détection : activé
- Procédure d'arrêt d'urgence : activée
- Dans ce cas, le module de commutation sélectionnera les signaux autonomes issus du module de commande 1.

A la lecture de cette description, on constate qu'un système selon l'invention est très facile à installer sur un chariot élévateur existant, puisque les modules additionnels viennent s'interfacer aisément sur l'architecture électrique et électronique existantes. En outre, un tel système de commande tire avantageusement partie des capteurs, boutons, sélecteurs ... déjà présents sur le chariot, réduisant encore les coûts induits par l'équipement de chariots existants.

De manière générale, un système selon l'invention permet de transformer facilement et à des coûts modérés un chariot élévateur manuel en chariot élévateur autonome, tout en respectant les contraintes de sécurité dues à l'environnement spécifique dans lequel sont amenés à évoluer de tels chariots.

## Revendications

1. Système de commande d'un chariot (11) élévateur, comportant :
- Des organes de commande humaine générant des signaux de pilotage manuel d'actionneurs du véhicule,
- Un module de détection (4) de l'environnement du véhicule,
- Un module de navigation (3) permettant de générer des signaux de consigne de pilotage en fonction d'une instruction reçue,
- Un module de commande (1) générant des signaux de pilotage, ce module de commande comprenant :
∘ Un sous-module de commande automatique générant des signaux de pilotage autonome à destination d'un ou plusieurs actionneurs du véhicule, en fonction des signaux de consigne et des informations issues du module de détection,
∘ Un sous-module de commande assistée générant des signaux de pilotage manuels corrigés en fonction des signaux de pilotage manuels et des informations issues du module de détection et/ou des signaux de consigne de pilotage,
- Un module de commutation (2) agencé pour sélectionner un ou des signaux de pilotage manuel et/ou un ou des signaux de pilotage autonome, et/ou un ou des signaux de pilotage manuels corrigés.

2. Système de commande selon la revendication 1, dans lequel le module de commutation (2) est agencé pour sélectionner les signaux de pilotage en fonction de quatre modes de fonctionnement :
- Un mode manuel dans lequel seuls les signaux manuels sont sélectionnés,
- Un mode tout-automatique dans lequel seuls les signaux autonomes sont sélectionnés,
- Un mode manuel à sécurisation assistée, dans lequel sont sélectionnés les signaux de pilotage manuels corrigés par les informations issues du module de détection,
- Un mode manuel à navigation assistée, dans lequel sont sélectionnés les signaux de pilotage manuel corrigés par les signaux de consigne de pilotage.

3. Système selon la revendication 1 ou 2, dans lequel le module de commutation (2) permet également de choisir un mode maintenance, dans lequel l'ensemble des éléments du système de commande, à l'exception des organes à commande humaine, sont désactivés.

4. Système de commande selon l'une des revendications précédentes, dans lequel le module de navigation (3) comprend des moyens de télécommunications avec un ordinateur distant.

5. Système de commande selon la revendication 4, dans lequel le module de navigation (3) comprend en outre des moyens de géolocalisation.

6. Système de commande selon la revendication 1 ou 2, dans lequel les signaux de consigne de pilotage comprennent une consigne de vitesse, une consigne d'angle de rotation des roues du chariot, une consigne d'élévation des fourches, une consigne d'angle d'inclinaison des fourches, une consigne d'écartement des fourches.

7. Système de commande selon l'une des revendications précédentes, dans lequel le module de détection (4) de l'environnement comprend un sous-module de gestion des fourches, comprenant :
- Des capteurs de détection de la présence de chargement sur les fourches,
- Des capteurs de position des fourches.

8. Système de commande selon la revendication 7, dans lequel le sous-module de gestion des fourches comprend des moyens pour détecter une incohérence au niveau du chargement des fourches, et pour émettre un signal d'arrêt en cas d'incohérence.

9. Système de commande selon l'une des revendications précédentes, dans lequel le module de détection (4) de l'environnement comprend un sous-module de détection des zones de protection, comprenant au moins un laser permettant de détecter la présence d'un obstacle dans une zone environnant le véhicule.

10. Système de commande selon l'une des revendications précédentes, dans lequel les organes de commande humaine sont compris dans le groupe comprenant : une pédale d'accélérateur (13c), une pédale de frein (13b), un volant (13e), un sélecteur de sens de marche du véhicule, une manette (13a) de commande de l'élévation, de l'inclinaison et de l'écartement des fourches.

11. Chariot (11) élévateur comprenant un système de commande selon l'une des revendications précédentes.

## Patentansprüche

1. System zur Steuerung eines Gabelstaplers (11), beinhaltend:
- Organe zur menschlichen Steuerung, die Signale zur manuellen Ansteuerung von Aktoren des Fahrzeugs erzeugen,
- ein Detektionsmodul (4) zur Detektion der Umgebung des Fahrzeugs,
- ein Navigationsmodul (3), das es ermöglicht, Ansteuerungssollwertsignale in Abhängigkeit von einer empfangenen Anweisung zu erzeugen,
- ein Steuerungsmodul (1), das Ansteuerungssignale erzeugt, wobei dieses Steuerungsmodul umfasst:
∘ ein Submodul zur automatischen Steuerung, das Signale zur autonomen Ansteuerung, die an einen oder mehrere Aktoren des Fahrzeugs gerichtet sind, in Abhängigkeit von den Sollwertsignalen und den aus dem Detektionsmodul stammenden Informationen erzeugt,
∘ ein Submodul zur unterstützten Steuerung, das korrigierte manuelle Ansteuerungssignale in Abhängigkeit von den manuellen Ansteuerungssignalen und den aus dem Detektionsmodul stammenden Informationen und/oder den Ansteuerungssollwertsignalen erzeugt,
- ein Umschaltmodul (2), das dazu eingerichtet ist, ein oder mehrere Signale zur manuellen Ansteuerung und/oder ein oder mehrere Signale zur autonomen Ansteuerung und/oder ein oder mehrere korrigierte manuelle Ansteuerungssignale zu wählen.

2. Steuerungssystem nach Anspruch 1, bei dem das Umschaltmodul (2) dazu eingerichtet ist, die Ansteuerungssignale in Abhängigkeit von vier Betriebsmodi zu wählen:
- einem manuellen Modus, in dem nur die manuellen Signale gewählt werden,
- einem vollautomatischen Modus, in dem nur die autonomen Signale gewählt werden,
- einem manuellen Modus mit unterstützter Sicherung, in dem die manuellen Ansteuerungssignale gewählt werden, die durch die aus dem Detektionsmodul stammenden Informationen korrigiert werden,
- einem manuellen Modus mit unterstützter Navigation, in dem die Signale zur manuellen Ansteuerung gewählt werden, die durch die Ansteuerungssollwertsignale korrigiert werden.

3. System nach Anspruch 1 oder 2, bei dem das Umschaltmodul (2) es auch ermöglicht, einen Wartungsmodus zu wählen, in dem sämtliche Elemente des Steuerungssystems, mit Ausnahme der Organe zur menschlicher Steuerung, deaktiviert sind.

4. Steuerungssystem nach einem der vorhergehenden Ansprüche, bei dem das Navigationsmodul (3) Mittel zur Telekommunikation mit einem entfernten Computer umfasst.

5. Steuerungssystem nach Anspruch 4, bei dem das Navigationsmodul (3) ferner Geolokalisierungsmittel umfasst.

6. Steuerungssystem nach Anspruch 1 oder 2, bei dem die Ansteuerungssollwertsignale einen Geschwindigkeitssollwert, einen Drehwinkelsollwert der Räder des Staplers, einen Hubsollwert der Gabeln, einen Neigungswinkelsollwert der Gabeln, einen Spreizungssollwert der Gabeln umfassen.

7. Steuerungssystem nach einem der vorhergehenden Ansprüche, bei dem das Detektionsmodul (4) zur Detektion der Umgebung ein Submodul zur Verwaltung der Gabeln umfasst, umfassend:
- Sensoren zur Detektion des Vorhandenseins von Ladung auf den Gabeln,
- Positionssensoren der Gabeln.

8. Steuerungssystem nach Anspruch 7, bei dem das Submodul zur Verwaltung der Gabeln Mittel umfasst, um eine Inkohärenz auf Ebene der Ladung der Gabeln zu detektieren und um im Inkohärenzfall ein Stoppsignal auszusenden.

9. Steuerungssystem nach einem der vorhergehenden Ansprüche, bei dem das Detektionsmodul (4) zur Detektion der Umgebung ein Submodul zur Detektion der Schutzbereiche umfasst, das mindestens einen Laser umfasst, der es ermöglicht, das Vorhandensein eines Hindernisses in einem das Fahrzeug umgebenden Bereich zu detektieren.

10. Steuerungssystem nach einem der vorhergehenden Ansprüche, bei dem die Organe zur menschlichen Steuerung in der Gruppe inbegriffen sind, die umfasst: ein Gaspedal (13c), ein Bremspedal (13b), ein Lenkrad (13e), einen Fahrtrichtungswähler des Fahrzeugs, einen Joystick (13a) zur Steuerung des Hebens, der Neigung und der Spreizung der Gabeln.

11. Gabelstapler (11), der ein Steuerungssystem nach einem der vorhergehenden Ansprüche umfasst.

## Claims

1. System for controlling a lift truck (11), including:
- Human control members generating signals for manually handling actuators of the vehicle,
- A module (4) for detecting the vehicle environment,
- A navigation module (3) making it possible to generate handling set point signals as a function of an instruction received,
- A control module (1) generating handling signals, this control module comprising:
∘ An automatic control sub-module generating autonomous handling signals sent to one or more actuators of the vehicle, as a function of the set point signals and the information from the detection module,
∘ An assisted control sub-module generating manual handling signals corrected as a function of the manual handling signals and the information from the detection module and/or the handling set point signals,
- A switching module (2) arranged to select one or more manual handling signals and/or one or more autonomous handling signals, and/or one or more corrected manual handling signals.

2. Control system according to Claim 1, in which the switching module (2) is arranged for selecting the handling signals as a function of four operating modes:
- A manual mode in which only the manual signals are selected,
- A fully automatic mode in which only the autonomous signals are selected,
- An assisted safety manual mode, in which the manual handling signals corrected by the information from the detection module are selected,
- An assisted navigation manual mode, in which the manual handling signals corrected by the handling set point signals are selected.

3. System according to Claim 1 or 2, in which the switching module (2) also makes it possible to choose a maintenance mode, in which all of the elements of the control system, with the exception of the human control members, are deactivated.

4. Control system according to one of the previous claims, in which the navigation module (3) comprises means of telecommunication with a remote computer.

5. Control system according to Claim 4, in which the navigation module (3) additionally comprises geolocation means.

6. Control system according to Claim 1 or 2, in which the handling set point signals comprise a speed set point, a truck wheel angle of rotation set point, a fork lifting set point, a fork angle set point, a fork spread set point.

7. Control system according to one of the previous claims, in which the environment detection module (4) comprises a fork management sub-module, comprising:
- Sensors for detecting the presence of a load on the forks,
- Fork position sensors.

8. Control system according to Claim 7, in which the fork management sub-module comprises means for detecting an inconsistency relating to the load on the forks, and for transmitting a stop signal in the event of any inconsistency.

9. Control system according to one of the previous claims, in which the environment detection module (4) comprises a sub-module for detecting protection zones, comprising at least one laser making it possible to detect the presence of an obstacle in a zone surrounding the vehicle.

10. Control system according to one of the previous claims, in which the human control members are in the group comprising: an accelerator pedal (13c), a brake pedal (13b), a steering wheel (13e), a vehicle direction of travel selector, a lever (13a) for controlling the lifting, angle and spread of the forks.

11. Lift truck (11) comprising a control system according to one of the previous claims.
